# EUROPEAN PATENT APPLICATION

(11) **EP 4 819 441 A1**
(43) Date of publication of application: **07.10.2026**
(21) Application number: 24899153.1
(22) Date of filing: 29.05.2024
(51) Int. Cl.: H02J 13/00

(54) **INTELLIGENT POWER DISTRIBUTION CONTROLLER AND SAFETY MONITORING SYSTEM AND CONTROLLER THEREOF, AND VEHICLE**

(30) Priority: 06.12.2023 CN 202311673423
(71) Applicant: Contemporary Amperex Intelligence Technology (Shanghai) Limited, Shanghai 201306 (CN)
(72) Inventor: PANG, Bo, Shanghai 201306 (CN); CHEN, Hao, Shanghai 201306 (CN)
(74) Representative: Gong, Jinping
(86) International application number: PCT/CN2024/096117
(87) International publication number: WO 2025/118501

(57) **Abstract**

An intelligent power distribution controller (100) and a safety monitoring system (200) and a controller (130) thereof, and a vehicle (1000) are provided, which relate to the technical field of vehicles. The intelligent power distribution controller (100) includes a main power supply channel (110) for supplying power to a first-level load and a second-level load, a backup power supply channel (120) for supplying power to the first-level load, and a controller (130) for monitoring the main power supply channel (110) and the backup power supply channel (120). The safety monitoring system (200) is applied to the controller (130). The safety monitoring system (200) includes: a first software layer (210), configured to perform level-one diagnosis on each power supply channel and perform communication management; a second software layer (220), configured to perform level-two diagnosis and control on each power supply channel and perform fault mode processing; and a third software layer (230), configured to perform hardware monitoring on the controller (130).

## Description

### CROSS-REFERENCE TO RELATED APPLICATIONS

The present application claims priority to the Chinese Patent Application No. 202311673423.5 filed on December 6, 2023 and entitled "INTELLIGENT POWER DISTRIBUTION CONTROLLER AND SAFETY MONITORING SYSTEM AND CONTROLLER THEREOF, AND VEHICLE", which is incorporated herein by reference in its entirety.

### TECHNICAL FIELD

The present application relates to the technical field of vehicles, in particular to a safety monitoring system of an intelligent power distribution controller, a controller, an intelligent power distribution controller, and a vehicle.

### BACKGROUND

In order to meet the requirements of independent protection for each power supply channel and redundant power supply for important safe-related loads, intelligent power distribution controllers have become the mainstream solution for low-voltage power supply control.

When an intelligent power distribution controller is applied to low-voltage power supply control of electric vehicles, with the development of intelligent electric vehicles, in order to ensure the safety and fail-operational capability of vehicle components, the functional safety level of the low-voltage power supply of the whole vehicle needs to reach ASIL D under the ISO26262 standard. However, in the related art, the technical solution of the safety monitoring system of an intelligent power distribution controller is difficult to meet this functional safety level requirement.

### SUMMARY

In view of the above problems, the present application provides an intelligent power distribution controller and a safety monitoring system and a controller thereof, and a vehicle. By analyzing the functional safety requirements and non-functional safety requirements of the intelligent power distribution controller, the application layer software functions of the intelligent power distributor are modularly designed, level-one diagnosis that does not affect power supply control is deployed in a first software layer, level-two diagnosis involving power supply control and power supply-related safety mechanisms are deployed in a second software layer, and a hardware monitoring function for the controller is deployed in a third software layer, so that the power supply of the intelligent power distribution controller to the load can easily meet the target functional safety level requirements.

According to a first aspect, the present application provides a safety monitoring system of an intelligent power distribution controller. The intelligent power distribution controller includes a main power supply channel for supplying power to a first-level load and a second-level load, a backup power supply channel for supplying power to the first-level load, and a controller for monitoring the main power supply channel and the backup power supply channel. The safety monitoring system is applied to the controller, and the safety monitoring system includes: a first software layer, configured to perform level-one diagnosis on each power supply channel and perform communication management; a second software layer, configured to perform level-two diagnosis and control on each power supply channel and perform fault mode processing; and a third software layer, configured to perform hardware monitoring on the controller.

In this technical solution of this embodiment of the present application, the intelligent power distribution controller is configured to receive electrical energy provided by a power supply source and supply power to a first-level load and a second-level load, where a main power supply channel and a backup power supply channel are respectively provided for the first-level load, and a main power supply channel is provided for the second-level load. The controller monitors the main power supply channel and the backup power supply channel.

The safety monitoring system of an intelligent power distribution controller is applied to the controller. By analyzing the functional safety requirements and non-functional safety requirements of the intelligent power distribution controller, the application layer software functions of the intelligent power distributor are modularly designed, the level-one diagnosis that does not affect power supply control is deployed in the first software layer, the level-two diagnosis involving power supply control and power supply-related safety mechanisms are deployed in the second software layer, and the hardware monitoring function for the controller is deployed in the third software layer, so that the power supply of the intelligent power distribution controller to the load can easily meet the target functional safety level requirements.

In some embodiments, the first software layer includes: a level-one diagnosis module, configured to perform level-one diagnosis on each power supply channel; and a communication management module, configured to perform communication management.

The first software layer performs a level-one diagnosis function on each power supply channel through the level-one diagnosis module, for example, performing level-one overcurrent diagnosis, level-one overvoltage diagnosis, and level-one overtemperature diagnosis on each power supply channel. The communication management module manages communication signals between the controller and the outside, for example, performing data processing, data packaging, and other operations on the diagnosis results generated by the level-one diagnosis module, and sending the diagnosis results obtained after processing to an external communication bus.

In some embodiments, the level-one diagnosis module is configured to perform level-one diagnosis on each power supply channel to obtain a level-one fault signal; the communication management module is configured to process the level-one fault signal and send the processed level-one fault signal to an external communication bus of the intelligent power distribution controller; where the level-one diagnosis includes one or more of level-one overcurrent diagnosis, level-one overvoltage diagnosis, level-one undervoltage diagnosis, and level-one overtemperature diagnosis.

The level-one diagnosis module can implement one or more of level-one overcurrent diagnosis, level-one overvoltage diagnosis, level-one undervoltage diagnosis, and level-one overtemperature diagnosis for the main power supply channel and the backup power supply channel, and generate a corresponding level-one fault signal based on each power supply channel, a level-one diagnosis type, and a diagnosis result. The communication management module receives the level-one fault signal generated by the level-one diagnosis module, performs corresponding processing, and sends the processed level-one fault signal to the external communication bus. For example, when the intelligent power distributor is applied to low-voltage power supply of a vehicle, the communication management module sends the processed level-one fault signal to a whole vehicle communication bus such as a CAN bus, and then sends the processed level-one fault signal to a whole vehicle controller through the whole vehicle communication bus, where the whole vehicle controller issues a fault reminder based on the level-one fault signal.

In some embodiments, functional safety levels of the level-one diagnosis module and the communication management module are QM under the ISO26262 standard.

The modules in the first software layer have no ASIL level requirements, and only issue alarms based on the level-one fault signal without affecting the power supply control of the intelligent power distribution controller. For example, based on the level-one overcurrent fault signal from the corresponding power supply channel outputted by the level-one diagnosis module, only a reminding signal for reminding that a level-one overcurrent occurs in this power supply channel is issued, to maintain the power supply channel to continue to supply power.

In some embodiments, the second software layer includes: a main level-two monitoring module, configured to perform level-two diagnosis and control on the main power supply channel; a backup level-two monitoring module, configured to perform level-two diagnosis and control on the backup power supply channel; and a fault mode processing module, configured to perform fault mode processing.

The main power supply channel is subjected to level-two diagnosis and control through the main level-two monitoring module, the backup power supply channel is subjected to level-two diagnosis and control through the backup level-two monitoring module, and the fault module receives fault signals and control signals obtained through diagnosis by the main level-two monitoring module and the backup level-two monitoring module, to perform corresponding fault mode processing.

In this embodiment, in accordance with the independence requirements after functional safety redundancy decomposition, the function of performing level-two diagnosis and control on the main power supply channel and the function of performing level-two diagnosis and control on the backup power supply channel are deployed in two different software modules, which are the main level-two monitoring module and the backup level-two monitoring module.

In some embodiments, the main level-two monitoring module is configured to perform level-two diagnosis on the main power supply channel to obtain a level-two fault signal and perform fault protection control on the main power supply channel; the backup level-two monitoring module is configured to perform level-two diagnosis on the backup power supply channel to obtain a level-two fault signal and perform fault protection control on the backup power supply channel; and the fault mode processing module is configured to arbitrate the level-two fault signal to obtain a fault mode signal and send the fault mode signal to an external communication bus of the intelligent power distribution controller through the first software layer; where the level-two diagnosis includes one or more of level-two overcurrent diagnosis, level-two overvoltage diagnosis, level-two undervoltage diagnosis, level-two overtemperature diagnosis, power supply switch stuck diagnosis, and current acquisition unit self-test diagnosis.

The main power supply channel is subjected to level-two diagnosis through the main level-two monitoring module to obtain a level-two fault signal, and fault protection control is performed on the main power supply channel, for example, the corresponding main power supply channel is controlled to be turned off. The backup power supply channel is subjected to level-two diagnosis through the backup level-two monitoring module to obtain a level-two fault signal, and fault protection control is performed on the backup power supply channel, for example, the corresponding main power supply channel is controlled to be turned off.

The fault mode processing module arbitrates the level-two fault signals obtained from the main level-two monitoring module and the backup level-two monitoring module to obtain a fault mode signal, and sends the fault mode signal to the external communication bus after processing by the communication management module of the first software layer. For example, the fault mode processing module can determine the level-two fault signal with the highest priority based on the received multiple level-two fault signals, use the level-two fault signal with the highest priority as the fault mode signal, or determine a corresponding fault mode based on the level-two fault signal with the highest priority to obtain a corresponding fault mode signal, and send the fault mode signal to the whole vehicle communication bus after signal processing by the communication management module. The whole vehicle controller receives the fault mode signal through a whole vehicle control bus, and controls the vehicle based on the fault mode signal, for example, controlling the vehicle to run at a reduced speed.

In some embodiments, each power supply channel includes a power supply switch and an electronic fuse. The electronic fuse is configured to output a level-two overcurrent signal and control the corresponding power supply switch to be turned off when a level-two overcurrent occurs in the corresponding power supply channel, and output a level-two overcurrent recovery signal when the level-two overcurrent in the corresponding power supply channel is recovered. The main level-two monitoring module and the backup level-two monitoring module are respectively configured to: receive the level-two overcurrent signal from the corresponding power supply channel; when the level-two overcurrent signal from the corresponding power supply channel is received, output a level-two overcurrent fault signal and send a power cut-off signal to the electronic fuse of the corresponding power supply channel, to control the power supply switch of the corresponding power supply channel to be turned off; after a first preset time of delay, acquire the number of power supply recovery times of the corresponding power supply channel, and when the number of power supply recovery times is less than a preset recovery number and the level-two overcurrent recovery signal from the corresponding power supply channel is received, send a power connection signal to the electronic fuse of the corresponding power supply channel, to control the power supply switch of the corresponding power supply channel to be turned on for power supply recovery.

When a level-two overcurrent occurs in the corresponding power supply channel, the electronic fuse outputs a level-two overcurrent signal to the corresponding level-two monitoring module and controls the corresponding power supply switch to be turned off. For example, when the electronic fuse provided on the main power supply channel determines that a level-two overcurrent occurs in the main power supply channel, the electronic fuse outputs a level-two overcurrent signal to the main level-two monitoring module and controls the corresponding power supply switch to be turned off, so that the main power supply channel where the level-two overcurrent occurs stops supplying power. When the electronic fuse provided on the backup power supply channel determines that a level-two overcurrent occurs in the backup power supply channel, the electronic fuse outputs a level-two overcurrent signal to the backup level-two monitoring module and controls the corresponding power supply switch to be turned off, so that the backup power supply channel where the level-two overcurrent occurs stops supplying power. In addition, the electronic fuse can also output a level-two overcurrent recovery signal to the corresponding main level-two monitoring module and backup level-two monitoring module after determining, based on current sampling, that the level-two overcurrent in the corresponding power supply channel is recovered, so that the main level-two monitoring module and the backup level-two monitoring module control the corresponding power supply switch to be turned on based on the level-two overcurrent recovery signal.

The main level-two monitoring module and the backup level-two monitoring module respectively receive the level-two overcurrent signal corresponding to the main power supply channel and the level-two overcurrent signal corresponding to the backup power supply channel, and determine that a level-two overcurrent occurs in the corresponding power supply channel based on the level-two overcurrent signal. The main level-two monitoring module and the backup level-two monitoring module not only output a level-two overcurrent fault signal to the fault mode processing module based on the received level-two overcurrent signal, but also control the power supply switch of the corresponding power supply channel to be turned off. It can be understood that before the main level-two monitoring module and the backup level-two monitoring module send a power cut-off signal, the electronic fuse has already controlled the corresponding power supply switch to be turned off, and the power cut-off signal sent by the main level-two monitoring module and the backup level-two monitoring module can make the electronic fuse confirm the turn off of the power supply switch again, improving the control stability.

After a turn-off time of the power supply switch reaches the first preset time, the number of power supply recovery times of the corresponding power supply channel is acquired. If the number of power supply recovery times is less than the preset recovery number and the level-two overcurrent recovery signal from the corresponding power supply channel is received, a power connection signal is sent to the electronic fuse of the corresponding power supply channel to control the power supply switch of the corresponding power supply channel to be turned on, making the corresponding power supply channel continue to supply power to the load.

In these embodiments, when a level-two overcurrent occurs in the power supply channel, the corresponding power supply channel is timely controlled based on the electronic fuse to stop supplying power, and the power cut-off signal outputted by the main level-two monitoring module and the backup level-two monitoring module is used to perform cut-off control again, improving the control stability. The main level-two monitoring module and the backup level-two monitoring module control the turn-on of the power supply switch based on condition determination.

In some embodiments, each power supply channel includes a power supply switch and an electronic fuse. The electronic fuse is configured to output a level-two overvoltage signal and control the corresponding power supply switch to be turned off when a level-two overvoltage occurs in the corresponding power supply channel, and output a level-two overvoltage recovery signal when the level-two overvoltage in the corresponding power supply channel is recovered. The main level-two monitoring module and the backup level-two monitoring module are respectively configured to: receive the level-two overvoltage signal from the corresponding power supply channel; when the level-two overvoltage signal from the corresponding power supply channel is received, output a level-two overvoltage fault signal and send a power cut-off signal to the electronic fuse of the corresponding power supply channel, to control the power supply switch of the corresponding power supply channel to be turned off; receive the level-two overvoltage recovery signal from the corresponding power supply channel; and when the level-two overvoltage recovery signal from the corresponding power supply channel is received, send a power connection signal to the electronic fuse of the corresponding power supply channel, to control the power supply switch of the corresponding power supply channel to be turned on for power supply recovery.

In these embodiments, when a level-two overvoltage occurs in the power supply channel, the corresponding power supply channel is timely controlled based on the electronic fuse to stop supplying power, and the power cut-off signal outputted by the main level-two monitoring module and the backup level-two monitoring module is used to perform cut-off control again, improving the control stability. After receiving the level-two overvoltage recovery signal from the corresponding power supply channel, the main level-two monitoring module and the backup level-two monitoring module control the turn-on of the power supply switch.

In some embodiments, each power supply channel includes a power supply switch and an electronic fuse. The electronic fuse is configured to acquire an actual on/off state of the corresponding power supply switch. The main level-two monitoring module and the backup level-two monitoring module are respectively configured to: receive the actual on/off state of the corresponding power supply switch; when the actual on/off state is different from an expected on/off state, accumulate a stuck fault time of the corresponding power supply switch, and output a power supply switch stuck fault signal when the accumulated stuck fault time reaches a first preset value; and when the actual on/off state is the same as the expected on/off state, decrement the stuck fault time of the corresponding power supply switch, and determine that the stuck of the corresponding power supply switch is recovered when the decremented stuck fault time reaches a second preset value.

When a stuck fault occurs in the power supply switch of the power supply channel, the intelligent power distribution controller cannot correctly control the power supply to the load, violating the functional safety requirements. Therefore, it is necessary to diagnose the stuck of the power supply switch and timely notify the staff when the stuck fault occurs, to avoid hazards.

The electronic fuse acquires the actual on/off state of the corresponding power supply switch. The main level-two monitoring module and the backup level-two monitoring module compare the actual on/off state of the corresponding power supply switch with the expected on/off state. When the actual on/off state is different from the expected on/off state, it is considered that the power supply switch is stuck, and the stuck fault time of the power supply switch is incremented by 1. When the accumulated stuck fault time reaches the first preset value, it is determined that a stuck fault occurs in the power supply switch, and a power supply switch stuck fault signal is outputted. When the actual on/off state is the same as the expected on/off state, the stuck fault time of the corresponding power supply switch is decremented by 1, and when the decremented stuck fault time reaches the second preset value, it is determined that the stuck of the corresponding power supply switch is recovered.

In some embodiments, each power supply channel includes an electronic fuse. The electronic fuse includes a current acquisition unit configured to acquire a current of the corresponding power supply channel. The main level-two monitoring module and the backup level-two monitoring module are respectively configured to: send a current acquisition self-test instruction to the electronic fuse of the corresponding power supply channel, so that the electronic fuse of the corresponding power supply channel performs a self-test on the current acquisition unit of the electronic fuse and outputs a sampling resistor voltage difference of the current acquisition unit; receive the sampling resistor voltage difference of the corresponding power supply channel; when the sampling resistor voltage difference does not reach a preset voltage difference threshold, output a current acquisition unit self-tested fault signal; and when the sampling resistor voltage difference reaches the preset voltage difference threshold, determine that a self-tested fault of the current acquisition unit is recovered.

The electronic fuse includes a current acquisition unit. When a level-two overcurrent occurs in the corresponding power supply channel, the electronic fuse issues a level-two overcurrent fault signal and turns off the power supply switch. If the current acquisition unit of the electronic fuse has a fault, the level-two overcurrent cannot be detected in time. When an overcurrent occurs in the power supply channel, the level-two overcurrent fault signal cannot be sent in time, and the intelligent power distribution controller also cannot timely control the power supply switch of the corresponding power supply channel to be turned off, so that the intelligent power distribution controller fails to operate normally, and the power supply of each power supply channel is uncontrolled, causing hazards. Therefore, in these embodiments, diagnosis is performed for the current acquisition unit to provide timely fault alarming.

In these embodiments, an operating state of the current acquisition unit of the electronic fuse is determined based on the sampling resistor voltage difference of the current acquisition unit acquired by the electronic fuse based on the current acquisition self-test instruction, so as to timely detect the fault of the current acquisition unit and provide a fault alarm reminder.

In some embodiments, functional safety levels of the main level-two monitoring module and the backup level-two monitoring module are higher than or equal to ASIL B under the ISO26262 standard, and a functional safety level of the fault mode processing module is ASIL D under the ISO26262 standard.

In these embodiments, based on the idea of redundancy decomposition, a power supply control function is divided into two functional modules of ASIL B(D) level, which are the main level-two monitoring module and the backup level-two monitoring module, to respectively implement the level-two diagnosis functions for the main power supply channel and the backup power supply channel, thereby making the power supply of the intelligent power distribution controller to the first-level load meet the safety requirements of ASIL D level.

In some embodiments, the third software layer includes: a system module, configured to perform hardware monitoring on the controller; and a driver module, configured to perform drive control on each power supply channel.

The third software layer is a related module of basic software BSW (Basic Software, basic software layer). Through the system module, basic operating system, watchdog monitoring, communication management, mode management, and other functions are provided for the intelligent power distribution controller, further implementing hardware monitoring for the controller, and the driver module is configured to receive related instructions sent from the second software layer to control the electronic fuse in each power supply channel.

In some embodiments, the intelligent power distribution controller further includes a safety power chip, and the system module is configured to: receive a watchdog seed of the safety power chip, where the watchdog seed includes a target control instruction of a target power supply channel, and the target power supply channel is at least one of the main power supply channel and the backup power supply channel; send the watchdog seed to the second software layer, so that the main level-two monitoring module and the backup level-two monitoring module of the second software layer generate a drive control instruction of the target power supply channel based on the target control instruction and send the drive control instruction to the driver module, so that the driver module generates a watchdog response signal; and receive the watchdog response signal and send the watchdog response signal to the safety power chip, so that the safety power chip determines whether the controller is normal based on the watchdog response signal.

The third software layer is combined with the safety power chip to monitor an execution order and an execution time of the software module in the second software layer. When a relevant software module is executed in a correct execution order within a specified time, a correct watchdog response signal is returned to the safety power chip. If the relevant software module fails to correctly operate within the specified time, the correct watchdog response signal cannot be returned to the safety power chip, thereby implementing hardware monitoring for the controller.

In some embodiments, functional safety levels of the system module and the driver module are ASIL D under the ISO26262 standard.

In some embodiments, the first-level load is a safe-related load, and the second-level load is a non-safe-related load.

According to a second aspect, the present application provides a controller, including the safety monitoring system of an intelligent power distribution controller as described above.

According to a third aspect, the present application provides an intelligent power distribution controller, including the safety monitoring system of an intelligent power distribution controller as described above, or the controller as described above.

According to a fourth aspect, the present application provides a vehicle, including the safety monitoring system of an intelligent power distribution controller as described above, or the controller as described above, or the intelligent power distribution controller as described above.

The above description is only an overview of the technical solutions of the present application. In order to more clearly understand the technical means of the present application, to implement them in accordance with the content of the specification, and to make the above and other purposes, features, and advantages of the present application more obvious and easier to understand, specific embodiments of the present application are illustrated below.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered as limitations to the present application. Moreover, the same parts are denoted by the same reference numerals in all the drawings. In the drawings:
FIG. 1 is a schematic block diagram of a safety monitoring system of an intelligent power distribution controller according to some embodiments of the present application;
FIG. 2 is a schematic block diagram of an intelligent power distribution controller according to some embodiments of the present application;
FIG. 3 is a schematic connection diagram of an intelligent power distribution controller according to some embodiments of the present application;
FIG. 4 is a schematic architecture diagram of a safety monitoring system of an intelligent power distribution controller according to some embodiments of the present application;
FIG. 5 is a flowchart of level-two overcurrent control according to some embodiments of the present application;
FIG. 6 is a flowchart of level-two overvoltage control according to some embodiments of the present application;
FIG. 7 is a flowchart of power supply switch stuck fault control according to some embodiments of the present application;
FIG. 8 is a self-test flowchart of a current acquisition unit according to some embodiments of the present application;
FIG. 9 is a schematic block diagram of a controller according to some embodiments of the present application;
FIG. 10 is a schematic block diagram of an intelligent power distribution controller according to some embodiments of the present application;
FIG. 11 is a schematic block diagram of an intelligent power distribution controller according to some embodiments of the present application;
FIG. 12 is a schematic block diagram of a vehicle according to some embodiments of the present application;
FIG. 13 is a schematic block diagram of a vehicle according to some embodiments of the present application; and
FIG. 14 is a schematic block diagram of a vehicle according to some embodiments of the present application.

### Reference signs in the drawings:

intelligent power distribution controller 100; main power supply channel 110; backup power supply channel 120; controller 130; CAN module 140; power supply switch 150; electronic fuse 160; safety power chip 170; safety monitoring system 200 for intelligent power distribution controller; first software layer 210; level-one diagnosis module 211; communication management module 212; second software layer 220; main level-two monitoring module 221; backup level-two monitoring module 222; fault mode processing module 223; third software layer 230; system module 231; driver module 232; high-voltage traction battery 300; DC/DC module 310; low-voltage storage battery 400; and vehicle 1000.

### DESCRIPTION OF EMBODIMENTS

The embodiments of the technical solutions of the present application are described in detail below with reference to the accompanying drawings. The following embodiments are only used to illustrate the technical solutions of the present application more clearly, and thus are only used as examples and cannot be used to limit the protection scope of the present application.

Unless otherwise defined, all technical and scientific terms used herein have the same meaning as commonly understood by those skilled in the technical field to which the present application belongs. The terms used herein are only for the purpose of describing specific embodiments and are not intended to limit the present application. The terms "include", "comprise", and any variations thereof in the specification and claims of the present application and the above description of the drawings are intended to cover non-exclusive inclusions.

In the description of the embodiments of the present application, technical terms such as "first" and "second" are only used to distinguish different objects and cannot be understood as indicating or implying relative importance or implicitly indicating the number, specific order, or primary-secondary relationship of the indicated technical features. In the description of the embodiments of the present application, "multiple" means two or more, unless otherwise specifically defined.

As used herein, "embodiment" means that a particular feature, structure, or characteristic described in connection with this embodiment can be included in at least one embodiment of the present application. The phrase appearing in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of the present application, the term "and/or" is merely an association describing associated objects, indicating that three relationships may exist. For example, A and/or B may indicate the following three cases: only A exists, both A and B exist, and only B exists. In addition, the character "/" herein generally indicates that the contextually associated objects in an "or" relationship.

In the description of the embodiments of the present application, the term "multiple" refers to two or more (including two). Similarly, "multiple groups" refers to two or more groups (including two groups), and "multiple pieces" refers to two or more pieces (including two pieces).

In the description of the embodiments of the present application, the orientation or positional relationship indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" is based on the orientation or positional relationship shown in the drawings, and is only for the convenience of describing the embodiments of the present application and simplifying the description, rather than indicating or implying that the referred apparatus or element must have a specific orientation and be constructed and operated in a specific orientation, and therefore cannot be understood as a limitation to the embodiments of the present application.

In the description of the embodiments of the present application, unless otherwise expressly specified and limited, technical terms such as "mounting", "connection", "join", and "fastening" should be understood in a broad sense, for example, it may be a fixed connection, a detachable connection, or an integration; it may alternatively be a mechanical connection or an electrical connection; it may be a direct connection or indirect connection through an intermedia medium; and it may be an internal communication between two elements or an interaction relationship between two elements. For those of ordinary skill in the art, the specific meanings of the above terms in the embodiments of the present application can be understood according to specific circumstances.

To meet the requirements of independent protection for each power supply channel and redundant power supply for important safe-related loads, intelligent power distribution controllers have become the mainstream solution for power supply control. When an intelligent power distribution controller is applied to low-voltage power supply of vehicles, with the development of intelligent electric vehicles, in order to ensure the safety and fail-operational capability of vehicle components, the low-voltage power supply of the whole vehicle needs to reach the functional safety level of ASIL D.

In the related art, a monitoring system for functional units of a vehicle includes: a functional module, a function monitoring module, and a controller monitoring module, where the functional module is configured to execute corresponding control functions, including but not limited to torque control, functional component monitoring, and verification module; the functional module performs safe data interaction with the function monitoring module; the function monitoring module performs fault monitoring and fault management on safety-related data and program execution in the functional module according to an internally defined algorithm; and the controller monitoring module performs fault management and fault monitoring on the functional module and the function monitoring module based on hardware.

However, the monitoring system in the related art is not suitable for the intelligent power distribution controller and cannot meet the functional safety level requirements of the intelligent power distribution controller. How to design a safety monitoring system of an intelligent power distribution controller and make the safety monitoring system reach a target functional safety level has become a design difficulty for the intelligent power distribution controller.

In view of this, the present application proposes a safety monitoring system of an intelligent power distribution controller, in which the idea of redundancy decomposition is applied to software power supply control monitoring, and software control modules of different functional safety levels are delayed to different software layers, so that the power supply of the intelligent power distribution controller to the load can reach the functional safety level of ASIL D.

In the following embodiments, for convenience of description, the safety monitoring system of an intelligent power distribution controller of the present application is described in conjunction with the accompanying drawings.

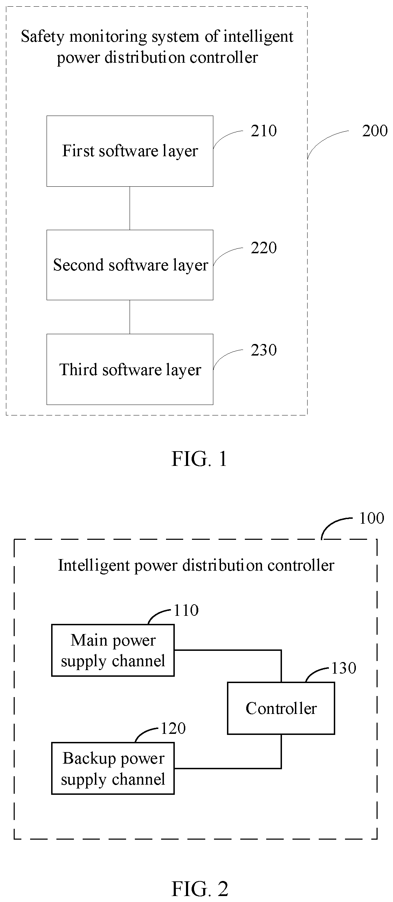

According to some embodiments of the present application, with reference to FIG. 1 and FIG. 2, an intelligent power distribution controller 100 includes a main power supply channel 110 for supplying power to a first-level load and a second-level load, a backup power supply channel 120 for supplying power to the first-level load, and a controller 130 for monitoring the main power supply channel 110 and the backup power supply channel 120; and a safety monitoring system 200 is applied to the controller 130.

Specifically, the intelligent power distribution controller 100 is configured to automatically control and manage various components in a power distribution network to achieve energy conservation as well as safe and reliable operation. For example, the intelligent power distribution controller 100 can automatically adjust the operating parameters of each component based on real-time data to ensure the normal operation of a power distribution system.

The first-level load and the second-level load may be divided based on the actual functional requirements of an application device. For example, the first-level load is a safe-related load, and the second-level load is a non-safe-related load. Exemplarily, when the intelligent power distribution controller 100 is used for low-voltage power supply of a vehicle, the first-level load is a load required to ensure vehicle driving safety, such as an electric power steering system, a vehicle body electronic stability system, and an electric control braking system; and the second-level load is other loads in the vehicle other than the first-level load, such as a cockpit controller, a wiper washing system, a loudspeaker, and an in-cabin camera. To ensure safe driving of the vehicle, normal power supply to the first-level load needs to be ensured, and the second-level load may need power supply or may not need power supply, which can be flexibly adjusted according to actual conditions.

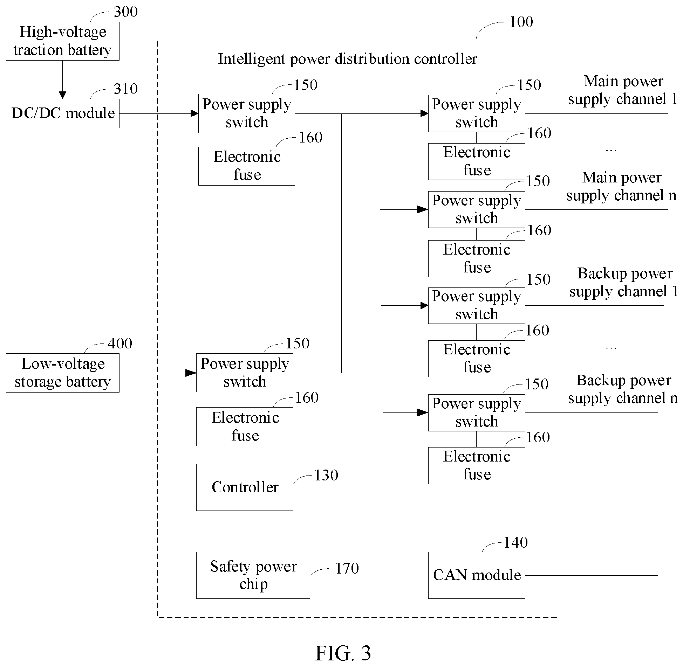

The intelligent power distribution controller 100 is provided with a main power supply channel 110 and a backup safety power supply channel 120 for power supply to the first-level load, and is provided with a main power supply channel for power supply to the second-level load. Taking FIG. 3 as an example, one end of each of multiple main power supply channels is connected to a high-voltage traction battery 300 through a DC/DC (Direct Current-Direct Current, direct current-direct current) module 310, and the other end of each main power supply channel (main power supply channel 1, ..., and main power supply channel n) is connected to a corresponding first-level load and second-level load, where the DC/DC module 310 is configured to convert high-voltage direct current provided by the high-voltage traction battery 300 into low-voltage direct current output, and supply power to the first-level load and second-level load through the main power supply channel. One end of each of the multiple backup power supply channels (backup power supply channel 1, ..., and backup power supply channel n) is connected to a low-voltage storage battery 400, and the other end is connected to a corresponding first-level load, so as to supply power to the first-level load through low-voltage direct current provided by the low-voltage storage battery 400.

The controller 130 of the intelligent power distribution controller 100 monitors the main power supply channel 110 and the backup power supply channel 120, and timely regulates the power supply channel based on monitoring results. For example, the controller 130 can perform real-time monitoring on parameters such as current, voltage, and temperature of each power supply channel. For example, when the current of any power supply channel exceeds a preset overcurrent threshold, the controller 130 controls the corresponding power supply channel to stop supplying power.

The intelligent power distribution controller 100 provides a redundancy design on the main power supply channel 110 for supplying power to the first-level load through the backup power supply channel 120, so that when the main power supply channel 110 for supplying power to the first-level load has a fault, the corresponding first-level load can still be supplied with power through the corresponding backup power supply channel 120.

Referring to FIG. 1, the safety monitoring system 200 for an intelligent power distribution controller of the present application may include: a first software layer 210, a second software layer 220, and a third software layer 230.

The first software layer 210 is configured to perform level-one diagnosis on each power supply channel and perform communication management. The second software layer 220 is configured to perform level-two diagnosis and control on each power supply channel and perform fault mode processing. The third software layer 230 is configured to perform hardware monitoring on the controller.

Specifically, level-one diagnosis and level-two diagnosis are used to divide diagnosis levels, where the level of level-two diagnosis is higher than that of level-one diagnosis, which can be specifically set based on actual conditions. For example, level-one diagnosis is used to determine whether the current in each power supply channel exceeds a first threshold. If the current exceeds the first threshold, it is considered that there is an overcurrent risk, but it does not affect power supply safety, and an alarm signal may be issued for reminding; and level-two diagnosis is used to determine whether the current in each power supply channel exceeds a second threshold, where the second threshold is greater than the first threshold, and when the current exceeds the second threshold, it is considered that an overcurrent occurs in the power supply channel, which affects power supply safety, and thus it is necessary to cut off the power supply channel.

Communication management may include data processing, data packaging, signal sending, and the like for signals sent by the controller, which is not limited herein.

The safety monitoring system 200 for an intelligent power distribution controller performs level-one diagnosis on each power supply channel through the first software layer 210 based on operating parameters of each power supply channel that are acquired in real time, determines whether the operating parameters of each power supply channel reach a level-one fault threshold, and implements communication with the outside through the first software layer 210. For example, when the operating parameter is current, and the current of the power supply channel reaches a first current threshold, it is considered that the current of the power supply channel reaches the level-one fault threshold, a corresponding fault reminding signal is generated, and the reminding signal is sent out through the first software layer 210.

The safety monitoring system 200 for an intelligent power distribution controller performs level-two diagnosis on each power supply channel through the second software layer 220 based on real-time operating parameters of each power supply channel, and controls the corresponding power supply channel when it is determined that the power supply channel reaches a level-two fault threshold, to ensure power supply safety, as well as performs corresponding fault mode processing for a level-two fault of the corresponding power supply channel. Fault mode processing refers to determining a corresponding fault mode for a level-two diagnosis fault of each power supply channel to generate a corresponding fault mode signal. For example, in an example in which the intelligent power distribution controller 100 is applied to low-voltage power supply of a vehicle, when it is determined that there is a level-two fault in the power supply channel, a corresponding fault mode signal is determined based on the level-two diagnosis fault, and the fault mode signal is sent to a whole vehicle controller through the first software layer 210, and the whole vehicle controller controls the vehicle to enter a braking state based on the fault mode signal.

Corresponding fault mode processing strategies can be set based on different types of level-two diagnosis faults, which is not limited herein. For example, in an example in which the intelligent power distribution controller is applied to low-voltage power supply of a vehicle and the operating parameter is current, when the current of a power supply channel reaches a second current threshold, it is considered that the current of the power supply channel reaches the level-two fault threshold, and it is determined that a level-two overcurrent fault occurs in the power supply channel. Under a condition that the power supply channel is controlled to be turned off, a corresponding fault mode signal is generated to control the vehicle to perform deceleration control corresponding to the level-two overcurrent fault.

The safety monitoring system 200 for an intelligent power distribution controller performs hardware monitoring on the controller through the third software layer 230, to make the controller operate normally and meet the functional safety requirements.

In the technical solution of the embodiments of the present application, the safety monitoring system 200 for an intelligent power distribution controller monitors the main power supply channel and the backup power supply channel through the first software layer 210 and the second software layer 220, to perform hazard analysis on the main power supply channel and the backup power supply channel, and perform risk assessment, so as to execute different safety strategies. For example, when the first software layer 210 determines that a level-one fault occurs in the power supply channel, a fault reminder is issued; and when the second software layer 220 determines that a level-two fault such as overcurrent or overvoltage occurs in the power supply channel, power supply switching of the faulty channel is performed, so that the power supply of other channels is not affected. In addition, the backup power supply channel corresponding to the main power supply channel with a fault can still normally supply power to the first-level load. Moreover, the hardware of the controller is monitored through the third software layer 230, so that the above safety monitoring strategies can be performed when the controller is normal, meeting the functional safety requirements.

Thus, according to the safety monitoring system of the present application, by analyzing the functional safety requirements and non-functional safety requirements, the application layer software functions of the intelligent power distribution controller are modularly designed, the level-one diagnosis that does not affect power supply control is deployed in the first software layer 210, the level-two diagnosis involving power supply control and power supply-related safety mechanisms are deployed in the second software layer 220, and the hardware monitoring function is deployed in the third software layer 230.

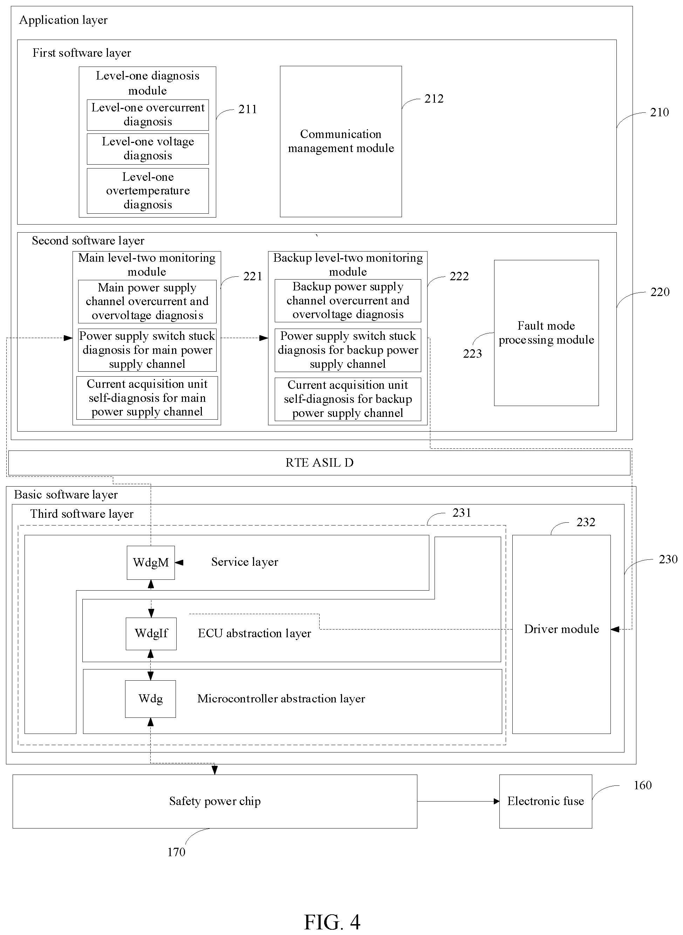

According to some embodiments of the present application, with reference to FIG. 4, the first software layer 210 includes: a level-one diagnosis module 211 configured to perform level-one diagnosis on each power supply channel, and a communication management module 212 configured to perform communication management.

Specifically, the first software layer 210 can perform level-one diagnosis on each power supply channel through the level-one diagnosis module 211 based on the operating parameters of each power supply channel that are acquired in real time and preset level-one diagnosis thresholds. The level-one diagnosis may include level-one overcurrent diagnosis, level-one overvoltage diagnosis, level-one overtemperature diagnosis, and the like. The level-one diagnosis module 211 compares the operating parameters that are acquired in real time with the level-one diagnosis thresholds to determine a level-one diagnosis result of each power supply channel. For example, when it is determined that the current of a power supply channel reaches a level-one overcurrent diagnosis threshold, it is determined that there is an overcurrent risk in the power supply channel, and a corresponding overcurrent reminding signal is generated.

The communication management module 212 receives the reminding signal generated by the level-one diagnosis module 211 and sends the reminding signal out. In addition, the communication management module 212 also performs signal processing on the sent signals generated by the second software layer 220 and the third software layer 230 and sends the signals out. For example, when the intelligent power distribution controller 100 is applied to a vehicle, the communication management module 212 sends the reminding signal generated by the level-one diagnosis module 211 to a CAN bus of the vehicle through a CAN module 140.

According to some embodiments of the present application, the level-one diagnosis module 211 is configured to perform level-one diagnosis on each power supply channel to obtain a level-one fault signal; and the communication management module 212 is configured to process the level-one fault signal and send the processed level-one fault signal to an external communication bus of the intelligent power distribution controller; where the level-one diagnosis includes one or more of level-one overcurrent diagnosis, level-one overvoltage diagnosis, level-one undervoltage diagnosis, and level-one overtemperature diagnosis.

Specifically, the level-one diagnosis module 211 can set a first overcurrent threshold based on level-one overcurrent diagnosis, set a first overvoltage threshold based on level-one overvoltage diagnosis, set a first undervoltage threshold based on level-one undervoltage diagnosis, and set a first overtemperature threshold based on level-one overtemperature diagnosis. The level-one diagnosis module 211 compares the current, voltage, and temperature parameters of each power supply channel that are acquired in real time with preset thresholds to determine the corresponding level-one fault signals. For example, in an example in which the level-one diagnosis module 211 is configured to perform level-one overcurrent diagnosis on each power supply channel, the level-one diagnosis module 211 compares the received current of the power supply channel with the first overcurrent threshold, and generates a level-one overcurrent fault signal when it is determined that the current exceeds the first current threshold.

The communication management module 212 processes the level-one fault signal generated by the level-one diagnosis module 211, for example, encapsulating and packaging the level-one fault signal, and then sending the processed level-one fault signal to the external communication bus of an intelligent power distributor.

According to some embodiments of the present application, functional safety levels of the level-one diagnosis module 211 and the communication management module 212 are QM.

Specifically, according to ISO26262, five safety levels: QM and ASIL-A, B, C, and D are determined. Taking a vehicle as an example, QM means that as long as a standard quality management process (IATF16949) is followed, no additional safety measures are required. ASIL A represents the lowest degree of automotive hazard, while ASIL D represents the highest degree of automotive danger. For example, safety airbags, anti-lock braking systems, and power steering systems must reach ASIL D level, which is the most stringent level for safety assurance because the risk brought by its failure is the highest. Components such as taillights at the lowest level within a safety level range only needs to reach ASIL A level. Headlights and brake lights usually reach ASIL B level, while cruise control usually reaches ASIL C level.

In these embodiments, the functional safety levels of the level-one diagnosis module 211 and the communication management module 212 are QM. To be specific, the modules in the first software layer 210 do not need to meet the ASIL level requirements, and only alarms are provided based on the level-one fault signal, without affecting the power supply control of the intelligent power distribution controller.

According to some embodiments of the present application, the second software layer 220 includes: a main level-two monitoring module 221 configured to perform level-two diagnosis and control on the main power supply channel; a backup level-two monitoring module 222 configured to perform level-two diagnosis and control on the backup power supply channel; and a fault mode processing module 223 configured to perform fault mode processing.

Specifically, corresponding thresholds or determination conditions can be set based on level-two diagnosis, and when the acquired parameter data of each power supply channel meets preset conditions, it is determined that a corresponding level-two fault exists in the corresponding power supply channel. For example, level-two diagnosis may include level-two overcurrent diagnosis, level-two overvoltage diagnosis, level-two overtemperature diagnosis, and the like.

The second software layer 220 performs level-two diagnosis on the main power supply channel through the main level-two monitoring module 221, and executes a corresponding control strategy based on the type of the existing level-two fault when it is determined that a level-two fault exists in the corresponding main power supply channel, such as controlling the turnoff, current limit, and the like of the corresponding main power supply channel.

The second software layer 220 performs level-two diagnosis on the backup power supply channel through the backup level-two monitoring module 222, and executes a corresponding control strategy based on the type of the level-two fault existing in the backup power supply channel when it is determined that a level-two fault exists in the corresponding backup power supply channel, such as controlling the turnoff, current limit, and the like of the corresponding backup power supply channel.

The fault mode processing module 223 receives the level-two fault signals outputted through the diagnosis of the main level-two monitoring module 221 and the backup level-two monitoring module 222, and processes the level-two fault signals to determine a corresponding fault mode.

In these embodiments, in accordance with the independence requirements after functional safety redundancy decomposition, the function of performing level-two diagnosis and control on the main power supply channel and the function of performing level-two diagnosis and control on the backup power supply channel are deployed in two different software modules, which are the main level-two monitoring module 221 and the backup level-two monitoring module 222, and then the fault signals determined based on the main level-two monitoring module 221 and the backup level-two monitoring module 222 are processed by the fault mode processing module 223 to determine a corresponding fault mode.

According to some embodiments of the present application, the main level-two monitoring module 221 is configured to perform level-two diagnosis on the main power supply channel to obtain a level-two fault signal and perform fault protection control on the main power supply channel. The backup level-two monitoring module 222 is configured to perform level-two diagnosis on the backup power supply channel to obtain a level-two fault signal and perform fault protection control on the backup power supply channel. The fault mode processing module 223 is configured to arbitrate the level-two fault signal to obtain a fault mode signal and send the fault mode signal to an external communication bus of the intelligent power distribution controller through the first software layer 210. The level-two diagnosis includes one or more of level-two overcurrent diagnosis, level-two overvoltage diagnosis, level-two undervoltage diagnosis, level-two overtemperature diagnosis, power supply switch stuck diagnosis, and current acquisition unit self-test diagnosis.

Specifically, level-two overcurrent diagnosis can be implemented based on a preset second overcurrent threshold, level-two overvoltage diagnosis can be implemented based on a preset second overvoltage threshold, level-two undervoltage diagnosis can be implemented based on a preset second undervoltage threshold, level-two overtemperature diagnosis can be implemented based on a preset second overtemperature threshold, power supply switch stuck diagnosis can be determined based on the state and stuck time of the power supply switch, and current acquisition unit self-test diagnosis can be determined based on the operating state of a current sampling unit. It should be noted that the level-two diagnosis thresholds or level-two diagnosis conditions for different power supply channels may be different, which may be specifically defined according to actual needs.

The main power supply channel is subjected to level-two diagnosis through the main level-two monitoring module 221 to obtain a corresponding level-two fault signal, and corresponding fault protection control is performed on the main power supply channel. For example, the main power supply channel is controlled to be turned off and the corresponding backup power supply channel is controlled to be turned on, so as to continue to supply power to the corresponding first-level load through the backup power supply channel. The backup power supply channel is subjected to level-two diagnosis through the backup level-two monitoring module 222 to obtain a corresponding level-two fault signal, and fault protection control is performed on the backup power supply channel. For example, the backup power supply channel is controlled to be turned off.

After arbitrating the level-two fault signals obtained from the main level-two monitoring module 221 and the backup level-two monitoring module 222, the fault mode processing module 223 outputs a corresponding fault mode signal, and sends the fault mode signal to the external communication bus after the fault mode signal is processed by the communication management module 212 of the first software layer 210. To be specific, the level-one fault signal and the fault mode signal that is determined based on the level-two fault signal are sent to the external communication bus through the communication management module 212. For example, when the intelligent power distribution controller is applied to low-voltage power supply of a vehicle, the communication management module 212 can output the fault mode signal to a CAN bus of the vehicle, and output the fault mode signal to other controllers of the vehicle such as the central controller based on the CAN bus. Other controllers of the vehicle execute corresponding fault control measures based on the received fault mode signal, such as reducing the vehicle speed, to ensure the driving safety.

According to some embodiments of the present application, with reference to FIG. 3 and FIG. 4, each power supply channel includes a power supply switch 150 and an electronic fuse 160. The electronic fuse 160 is configured to output a level-two overcurrent signal and control the corresponding power supply switch 150 to be turned off when a level-two overcurrent occurs in the corresponding power supply channel, and output a level-two overcurrent recovery signal when the level-two overcurrent in the corresponding power supply channel is recovered.

The main level-two monitoring module 221 and the backup level-two monitoring module 222 are respectively configured to: receive the level-two overcurrent signal from the corresponding power supply channel; when the level-two overcurrent signal from the corresponding power supply channel is received, output a level-two overcurrent fault signal and send a power cut-off signal to the electronic fuse 160 of the corresponding power supply channel, to control the power supply switch 150 of the corresponding power supply channel to be turned off; after a first preset time of delay, acquire the number of power supply recovery times of the corresponding power supply channel; and when the number of power supply recovery times is less than a preset recovery number and the level-two overcurrent recovery signal from the corresponding power supply channel is received, send a power connection signal to the electronic fuse 160 of the corresponding power supply channel, to control the power supply switch 150 of the corresponding power supply channel to be turned on for power supply recovery.

The power supply switch 150 may be connected in series in the corresponding power supply channel, and the corresponding power supply channel is controlled by controlling the power supply switch 150. Specifically, when the power supply switch 150 connected in series in a power supply channel is controlled to be turned on, the power supply channel is in a turned-on state, and a corresponding load can be supplied with power through the power supply channel; and when the power supply switch 150 connected in series in a power supply channel is controlled to be turned off, the power supply channel is in a cut-off state, and the power supply channel stops supplying power.

A fuse refers to an electrical component configured to protect a circuit from current damage. Its operating principle is to control the current flowing through a fuse wire, and when the current exceeds the rated current of the fuse wire, the fuse wire is melted, so that the circuit is disconnected to protect the circuit and equipment from current damage. There are various types of fuses, such as liquid fuses, gas fuses, and electronic fuses. The electronic fuse 160 uses an electronic component, such as a transistor or switch, to control the on-off state of the circuit. In these embodiments, the rated current may be set based on the level-two overcurrent diagnosis requirements.

During operation, on one hand, the electronic fuse 160 samples the current of the corresponding power supply channel, and outputs a level-two overcurrent signal to the corresponding level-two monitoring module and turns off the corresponding power supply switch 150 when a level-two overcurrent occurs in the corresponding power supply channel. For example, when the electronic fuse 160 provided on the main power supply channel determines that a level-two overcurrent occurs, the electronic fuse 160 outputs a level-two overcurrent signal to the main level-two monitoring module 221 and controls the power supply switch 150 on the corresponding main power supply channel to be turned off, so that the main power supply channel where the level-two overcurrent occurs stops supplying power; and when the electronic fuse 160 provided on the backup power supply channel determines that a level-two overcurrent occurs, the electronic fuse 160 outputs a level-two overcurrent signal to the backup level-two monitoring module 222 and controls the corresponding power supply switch 150 to be turned off, so that the backup power supply channel where the level-two overcurrent occurs stops supplying power. On the other hand, when the level-two overcurrent in the corresponding power supply channel is recovered, the electronic fuse 160 outputs a level-two overcurrent recovery signal to the main level-two monitoring module 221 and the backup level-two monitoring module 222. The level-two overcurrent recovery can be determined based on a signal received by the electronic fuse 160, or can be determined based on a sampled current value, which is not limited herein.

The main level-two monitoring module 221 and the backup level-two monitoring module 222 respectively receive the level-two overcurrent signal corresponding to the main power supply channel and the level-two overcurrent signal corresponding to the backup power supply channel, determine that a level-two overcurrent occurs in the corresponding power supply channel based on the level-two overcurrent signal, output a level-two overcurrent fault signal to the fault mode processing module 223 based on the received level-two overcurrent signal, and control the power supply switch 150 of the corresponding power supply channel to be turned off. It can be understood that before the main level-two monitoring module 221 and the backup level-two monitoring module 222 control the corresponding power supply switch 150, the power supply switch 150 has been controlled to be turned off by the electronic fuse 160.

After a turn-off time of the power supply switch 150 reaches the first preset time, the number of power supply recovery times of the corresponding power supply channel is acquired. If the number of power supply recovery times is less than the preset recovery number and the level-two overcurrent recovery signal from the corresponding power supply channel is received, the main level-two monitoring module 221 and the backup level-two monitoring module 222 send a power connection signal to the electronic fuse 160 of the corresponding power supply channel, and the electronic fuse 160 controls the power supply switch 150 of the corresponding power supply channel to be turned on based on the received power connection signal, so that the power supply channel recovers power supply. Otherwise, the turned-off state of the power supply switch 150 is still maintained.

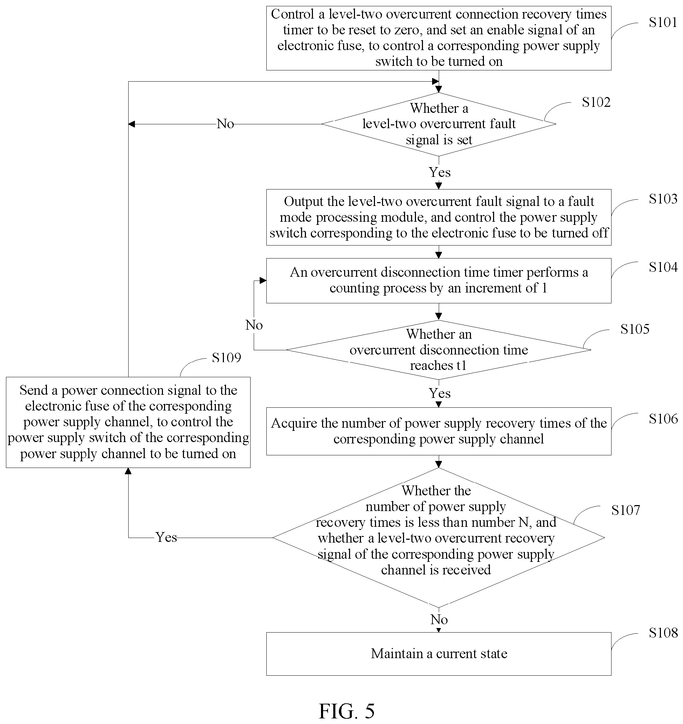

In a specific embodiment of the present application, the overcurrent protection control of the main level-two monitoring module 221 and the backup level-two monitoring module 222 may include the following steps as shown in FIG. 5.

S101. Control a level-two overcurrent connection recovery times timer to be reset to zero, and control an enable signal of the electronic fuse to be set, to control the corresponding power supply switch to be turned on.

S102. Determine whether the level-two overcurrent fault signal is set, where the level-two overcurrent fault signal is set to 1. When the level-two overcurrent fault signal is set to 1, the corresponding main level-two monitoring module 221 and backup level-two monitoring module 222 receive a level-two overcurrent signal, determine that a level-two overcurrent fault occurs in the corresponding power supply channel, and execute step S103; otherwise, the main level-two monitoring module 221 and the backup level-two monitoring module 222 do not receive the level-two overcurrent signal, and no level-two overcurrent occurs in the power supply channel, therefore, execute step S102.

S103. Output a level-two overcurrent fault signal to a fault mode processing module, and control the power supply switch corresponding to the electronic fuse to be turned off.

S104. Make an overcurrent disconnection time timer perform a counting process by an increment of 1.

S105. Determine whether the overcurrent disconnection time reaches a first preset time t1. If yes, execute step S106; otherwise, execute step S104.

S106. Acquire the number of power supply recovery times of the corresponding power supply channel.

S107. Determine whether the number of power supply recovery times is less than a preset recovery number N and whether a level-two overcurrent recovery signal from the corresponding power supply channel is received. If yes, execute step S109; otherwise, execute step S108.

S108. Maintain a current state.

S109. Send a power connection signal to the electronic fuse of the corresponding power supply channel to control the power supply switch of the corresponding power supply channel to be turned on, and execute step S102.

It should be noted that the above overcurrent protection control process corresponds to the power supply switch and power supply channel, and parameters for the overcurrent protection control can be set based on parameters such as different power supply switch types, and power supply loads or power supply requirements of the power supply channel, which is not limited herein.

According to some embodiments of the present application, referring to FIG. 3, each power supply channel includes a power supply switch 150 and an electronic fuse 160. The electronic fuse 160 is configured to output a level-two overvoltage signal and control the corresponding power supply switch 150 to be turned off when a level-two overvoltage occurs in the corresponding power supply channel, and output a level-two overvoltage recovery signal when the level-two overvoltage in the corresponding power supply channel is recovered.

The main level-two monitoring module 221 and the backup level-two monitoring module 222 are respectively configured to: receive the level-two overvoltage signal from the corresponding power supply channel; when the level-two overvoltage signal from the corresponding power supply channel is received, output a level-two overvoltage fault signal and send a power cut-off signal to the electronic fuse 160 of the corresponding power supply channel, to control the power supply switch 150 of the corresponding power supply channel to be turned off; receive the level-two overvoltage recovery signal from the corresponding power supply channel; and when the level-two overvoltage recovery signal from the corresponding power supply channel is received, send a power connection signal to the electronic fuse 160 of the corresponding power supply channel, to control the power supply switch 150 of the corresponding power supply channel to be turned on for power supply recovery.

The power supply switch 150 may be connected in series in the corresponding power supply channel, and the corresponding power supply channel is controlled by controlling the power supply switch 150. Specifically, when the power supply switch 150 connected in series in a power supply channel is controlled to be turned on, the power supply channel is in a turned-on state, and the corresponding load can be supplied with power through the power supply channel; and when the power supply switch 150 connected in series in a power supply channel is controlled to be turned off, the power supply channel is in a cut-off state, and the power supply channel stops supplying power to the corresponding load.

When a sampled voltage of the corresponding power supply channel exceeds a specified voltage value, the electronic fuse 160 controls the corresponding power supply switch to be turned off to control the power supply channel to stop supplying power. In these embodiments, the specified voltage value may be set based on the level-two overvoltage diagnosis requirements. On one hand, the electronic fuse 160 can output a level-two overvoltage signal to the corresponding level-two monitoring module when a level-two overvoltage occurs in the corresponding power supply channel, and simultaneously turn off the corresponding power supply switch 15. For example, when the electronic fuse 160 provided on the main power supply channel determines that a level-two overvoltage occurs, the electronic fuse 160 outputs a level-two overvoltage signal to the main level-two monitoring module 221 and controls the power supply switch 150 on the corresponding main power supply channel to be turned off, so that the main power supply channel where the level-two overvoltage occurs stops supplying power; and when the electronic fuse 160 provided on the backup power supply channel determines that a level-two overvoltage occurs, the electronic fuse 160 outputs a level-two overvoltage signal to the backup level-two monitoring module 222 and controls the corresponding power supply switch 150 to be turned off, so that the backup power supply channel where the level-two overvoltage occurs stops supplying power. On the other hand, when the level-two overvoltage in the corresponding power supply channel is recovered, the electronic fuse 160 outputs a level-two overvoltage recovery signal to the main level-two monitoring module 221 and the backup level-two monitoring module 222, where the electronic fuse 160 can determine, based on the received signal, that the level-two overvoltage of the corresponding power supply channel is recovered, or determine, based on voltage sampling, that the level-two overvoltage of the corresponding power supply channel is recovered, which is not limited herein.

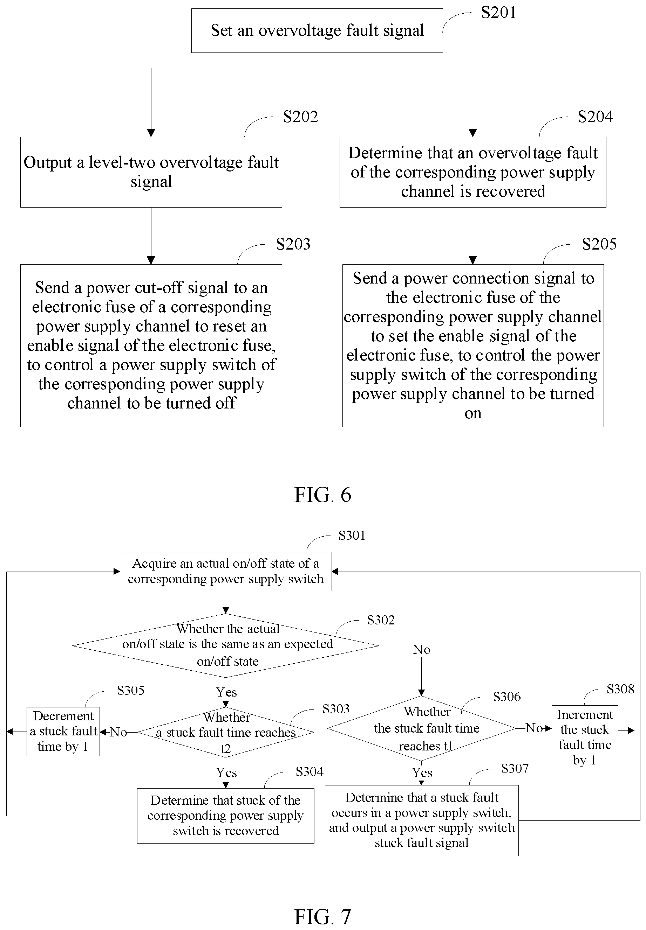

Specifically, the main level-two monitoring module 221 and the backup level-two monitoring module 222 generate a corresponding level-two overvoltage fault signal based on the received level-two overvoltage signal, control the power supply switch 150 of the corresponding power supply channel to be turned off, and control the power supply switch 150 of the corresponding power supply channel to be turned on based on the level-two overvoltage recovery signal, to recover power supply. A control process of the main level-two monitoring module 221 and the backup level-two monitoring module 222 for level-two overvoltage may, as shown in FIG. 6, include the following steps.

S201. Set an overvoltage fault signal, where the overvoltage fault signal is set to 1, which is used to indicate an initialization operation of overvoltage monitoring for the main level-two monitoring module 221 and the backup level-two monitoring module 222; when the main level-two monitoring module 221 and the backup level-two monitoring module 222 receive a level-two overvoltage signal from the corresponding power supply channel, execute step S202; and when the main level-two monitoring module 221 and the backup level-two monitoring module 222 receive the level-two overvoltage recovery signal from the corresponding power supply channel, execute step S204.

S202. Output a level-two overvoltage fault signal.

S203. Send a power cut-off signal to an electronic fuse of the corresponding power supply channel to reset an enable signal of the electronic fuse, to control a power supply switch of the corresponding power supply channel to be turned off.

S204. Determine that an overvoltage fault of the corresponding power supply channel is recovered.

S205. Send a power connection signal to the electronic fuse of the corresponding power supply channel and set the enable signal of the electronic fuse, to control the power supply switch of the corresponding power supply channel to be turned on.

It should be noted that before the main level-two monitoring module 221 and the backup level-two monitoring module 222 send the power cut-off signal based on the level-two overvoltage signal to control the corresponding power supply switch 150 to be turned off, the power supply switch 150 has been controlled to be turned off by the electronic fuse 160, and the main level-two monitoring module 221 and the backup level-two monitoring module 222 send the power cut-off signal again, so that the electronic fuse 160 can again control the power supply switch 150 to be turned off based on the power cut-off signal, further improving the control stability of power cutoff.

According to some embodiments of the present application, each power supply channel includes a power supply switch 150 and an electronic fuse 160. The electronic fuse 160 is configured to acquire an actual on/off state of the corresponding power supply switch 150. The main level-two monitoring module 221 and the backup level-two monitoring module 222 are respectively configured to: receive the actual on/off state of the corresponding power supply switch 150; when the actual on/off state is different from an expected on/off state, accumulate a stuck fault time of the corresponding power supply switch 150, and output a power supply switch stuck fault signal when the accumulated stuck fault time reaches a first preset value; and when the actual on/off state is the same as the expected on/off state, decrement the stuck fault time of the corresponding power supply switch 150, and determine that the stuck of the corresponding power supply switch is recovered when the decremented stuck fault time reaches a second preset value.

Specifically, the power supply switch 150 is connected in series in the corresponding power supply channel, and the corresponding power supply channel is controlled by controlling the power supply switch 150. The electronic fuse 160 detects an actual on/off state of the corresponding power supply switch 150.

When a stuck fault occurs in the power supply switch 150 of the power supply channel, the intelligent power distribution controller fails to correctly control the power supply to the load, violating the functional safety requirements. Therefore, it is necessary to diagnose the stuck of the power supply switch 150 and timely notify the staff that a fault occurs and a maintenance operation is to be performed, thereby avoiding hazards.

In view of this, the present application proposes a control process for a stuck fault of a power supply switch. Referring to FIG. 7, the control process may include the following steps.

S301. Acquire an actual on/off state of a corresponding power supply switch. During operation, an electronic fuse acquires the actual on/off state of the corresponding power supply switch and sends the actual on/off state to the corresponding main level-two monitoring module 221 and backup level-two monitoring module 222.

S302. Determine whether the actual on/off state of the corresponding power supply switch is the same as an expected on/off state. If yes, execute step S303; otherwise, execute step S306.

S303. Determine whether a stuck fault time reaches a second preset value t2. If yes, execute step S304; otherwise, execute step S305.

S304. Determine that stuck of the corresponding power supply switch is recovered, and execute step S301.

S305. Decrement the stuck fault time by 1, and execute step S301.

S306. Determine whether the stuck fault time reaches a first preset value t1. If yes, execute step S307; otherwise, execute step S308.

S307. Determine that a stuck fault occurs in the power supply switch, output a power supply switch stuck fault signal, and execute step S301.

S308. Increment the stuck fault time by 1, and execute step S301.

In this embodiment, the stuck fault of the power supply switch is diagnosed based on an actual operating state and an expected on/off state of the power supply switch 150, so as to timely notify the staff that a fault occurs and a maintenance operation is to be performed when a stuck fault occurs in the power supply switch 150 of the power supply channel.

According to some embodiments of the present application, each power supply channel includes an electronic fuse 160. The electronic fuse 160 includes a current acquisition unit configured to acquire a current of a corresponding power supply channel. The main level-two monitoring module 221 and the backup level-two monitoring module 222 are respectively configured to: send a current acquisition self-test instruction to the electronic fuse 160 of the corresponding power supply channel, so that the electronic fuse 160 of the corresponding power supply channel performs a self-test on the current acquisition unit of the electronic fuse 160 and outputs a sampling resistor voltage difference of the current acquisition unit; receive the sampling resistor voltage difference of the corresponding power supply channel; when the sampling resistor voltage difference does not reach a preset voltage difference threshold, output a current acquisition unit self-tested fault signal; and when the sampling resistor voltage difference reaches the preset voltage difference threshold, determine that a self-tested fault of the current acquisition unit is recovered.

Specifically, the electronic fuse 160 includes a current acquisition unit, and the electronic fuse 160 acquires the current of the power supply channel through the current acquisition unit, and issues an overcurrent fault signal and turns off the corresponding power supply switch 150 when it is determined that an overcurrent occurs in the power supply channel based on the acquired current. If the current acquisition unit of the electronic fuse 160 has a fault, that is, the electronic fuse 160 fails to detect the overcurrent in time, then when an overcurrent occurs in the corresponding power supply channel, the intelligent power distribution controller fails to timely turn off the corresponding power supply switch 150, so that the intelligent power distribution controller fails to operate normally, and the power supply of each power supply channel is uncontrolled, causing hazards.

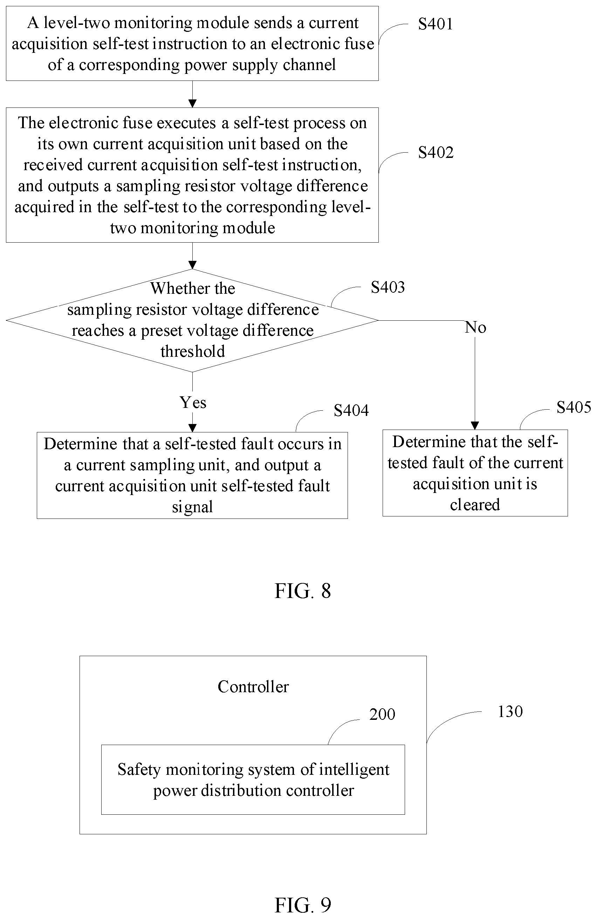

Therefore, in the present application, diagnosis is performed for the current acquisition unit to provide timely fault alarming. The electronic fuse 160 includes a current unit self-test function, and through a current acquisition self-test instruction sent by the main level-two monitoring module 221 and the backup level-two monitoring module 222 to the corresponding electronic fuse 160, a fault of the current acquisition unit of the electronic fuse 160 can be timely detected. In a specific embodiment of the present application, the implementation of the current acquisition unit self-test function of the main level-two monitoring module 221 and the backup level-two monitoring module 222 may, as shown in FIG. 8, include the following steps.

S401. A level-two monitoring module (a main level-two monitoring module 221 or a backup level-two monitoring module 222) sends a current acquisition self-test instruction to an electronic fuse of a corresponding power supply channel.

S402. The electronic fuse executes a self-test process on its own current acquisition unit based on the received current acquisition self-test instruction, and outputs a sampling resistor voltage difference acquired in the self-test to the corresponding level-two monitoring module.

S403. The level-two monitoring module determines whether the sampling resistor voltage difference reaches a preset voltage difference threshold. If yes, execute step S404; otherwise, execute step S405.

S404. Determine that a self-tested fault occurs in a current sampling unit, and output a current acquisition unit self-tested fault signal.

S405. Determine that a self-tested fault of the current acquisition unit is recovered.

According to some embodiments of the present application, functional safety levels of the main level-two monitoring module 221 and the backup level-two monitoring module 222 are higher than or equal to ASIL B, and a functional safety level of the fault mode processing module is ASIL D.

Specifically, in the present application, based on the idea of redundancy decomposition, the power supply control function is divided into two functional modules higher than or equal to ASIL B level, which are the main level-two monitoring module 221 and the backup level-two monitoring module 222. For example, the functional safety levels of the main level-two monitoring module 221 and the backup level-two monitoring module 222 may be ASIL B, ASIL C, ASIL D, or the like. When the functional safety levels of the main level-two monitoring module 221 and the backup level-two monitoring module 222 are level B, under a redundancy effect of the main power supply channel and the backup power supply channel, the functional safety requirements of ASIL D can be met.

In these embodiments, based on the idea of redundancy decomposition, the power supply control function is divided into two functional modules of ASIL B(D) level to respectively implement level-two diagnosis functions for the main power supply channel and the backup power supply channel, thereby making the power supply of the intelligent power distribution controller to the first-level load meet the safety requirements of ASIL D level.

Thus, the second software layer 220 of the present application implements the functions of application layers with a safety level higher than or equal to ASIL B level. The application layers include two major types of modules: the first type is a power supply control function directly achieved based on the functional safety requirements (power is supplied to the outside when no fault occurs, and power is timely cut off when a fault occurs); and the second type is safety mechanisms for components that affect the power supply control function after a fault occurs (such as power supply switch stuck diagnosis and current acquisition unit self-test). Specifically, the second software layer 220 may include the following functions: main power supply channel overcurrent and overvoltage protection functions, power supply switch stuck diagnosis for a main power supply channel, a current acquisition unit self-test function of a main power supply channel. Further, in accordance with the independence requirements after functional safety redundancy decomposition, the related control and diagnosis functions of the main power supply channel and the control and diagnosis of the backup power supply channel are deployed in two different software modules.

According to some embodiments of the present application, the third software layer 230 includes: a system module 231 configured to perform hardware monitoring on the controller; and a driver module 232 configured to perform drive control on each power supply channel.

Specifically, the third software layer 230 is related modules of basic software BSW (Basic Software, basic software layer). This level is divided into two major types of modules: an AutoSar standard module which is the system module 231 and the driver module 232, where the system module 231 provides basic functions of an operating system, watchdog monitoring, communication management, mode management, and the like for the intelligent power distribution controller, and the driver module 232 is configured to receive related instructions sent from the application layers (the level where the first software layer 210 and second software layer 220 are located) to control the electronic fuse 160.

According to some embodiments of the present application, the intelligent power distribution controller further includes a safety power chip 170. The system module 231 is configured to: receive a watchdog seed of the safety power chip 170, where the watchdog seed includes a target control instruction of a target power supply channel, and the target power supply channel is at least one of the main power supply channel and the backup power supply channel; send the watchdog seed to the second software layer 220, so that the main level-two monitoring module 221 and the backup level-two monitoring module 222 of the second software layer 220 generate a drive control instruction of the target power supply channel based on the target control instruction and send the drive control instruction to the driver module 232, so that the driver module 232 generates a watchdog response signal; and receive the watchdog response signal and send the watchdog response signal to the safety power chip 170, so that the safety power chip 170 determines, based on the watchdog response signal, whether the controller is normal.

Specifically, the target control instruction of the target power supply channel refers to a control instruction for the electronic fuse of the target power supply channel, which is used to control the turn-on and turn-off of the electronic switch 150 corresponding to the electronic fuse 160 of the target power supply channel.

The third software layer 230 is combined with the safety power chip 170 to monitor an execution order and execution time of software modules (main level-two monitoring module 221 and backup level-two monitoring module 222) in the second software layer 220. When a relevant software module fails to run according to a correct order and time, the safety power chip 170 forces the backup power supply channel to supply power, and the power supply of the backup power supply channel is no longer controlled by the controller.

A specific program flow monitoring route is shown by the dotted line in FIG. 4. First, the safety power chip 170 issues a watchdog seed including target control instructions of the main power supply channel and backup power supply channel, the system module 231 receives the watchdog seed, then abstracts the watchdog seed into Wdg through a microcontroller abstraction layer inside the system module 231, then abstracts the Wdg into WdgIf through an ECU abstraction layer, converts the WdgIf into WdgM through a service layer, and sends the WdgM to the main level-two monitoring module 221 and the backup level-two monitoring module 222 of the second software layer 220. The main level-two monitoring module 221 and the backup level-two monitoring module 222 generate a drive control instruction of the target power supply channel based on the received WdgM and send the drive control instruction to the driver module 232. The driver module 232 generates a watchdog response signal based on the drive control instruction, and the watchdog response signal is sent to the safety power chip 170 through the system module 231.

If the controller 130 executes the relevant software modules according to the above correct execution order within a specified time, a correct watchdog response signal is returned to the safety power chip 170. If the relevant software modules are not correctly executed within the specified time, the correct watchdog response signal cannot be returned. Thus, the safety power chip 170 can determine whether the controller 130 is normal based on the received watchdog response signal. When it is determined that the hardware of the controller 130 is normal, the controller 130 continues to execute power supply control. When it is determined that the hardware of the controller 130 is abnormal, the safety power chip 170 controls a fault pin to be pulled upwards, and the vehicle system enters a limp mode, that is, the electronic fuse 160 is controlled through the safety power chip 170.

According to some embodiments of the present application, functional safety levels of the system module 231 and the driver module 232 are ASIL D.

In these embodiments, a question-and-answer watchdog mechanism for logic and time independence diagnosis is implemented based on the system module 231 and driver module 232 at a functional safety level of ASIL D, hardware failures of the ECU and microcontroller layers are monitored, and the enable signal of the electronic fuse sent by the safety power chip 170 is received to control the turn-on and turn-off of the electronic switch 150 corresponding to the electronic fuse 160.

In conclusion, according to the safety monitoring system for an intelligent power distributor of the present application, by analyzing the functional safety requirements and non-functional safety requirements of the intelligent power distribution controller, the application layer software functions of the intelligent power distributor are modularly designed, the level-one diagnosis that does not affect power supply control is deployed in the first software layer, the level-two diagnosis involving power supply control and power supply-related safety mechanisms are deployed in the second software layer, and the hardware monitoring function for the controller is deployed in the third software layer, so that the power supply of the intelligent power distribution controller to the load can easily meet the target functional safety level requirements.

Corresponding to the above embodiments, the present application further proposes a controller.

As shown in FIG. 9, the controller 130 in the present application includes a safety monitoring system 200 for the intelligent power distribution controller as described above.

Corresponding to the above embodiments, the present application further proposes an intelligent power distribution controller.

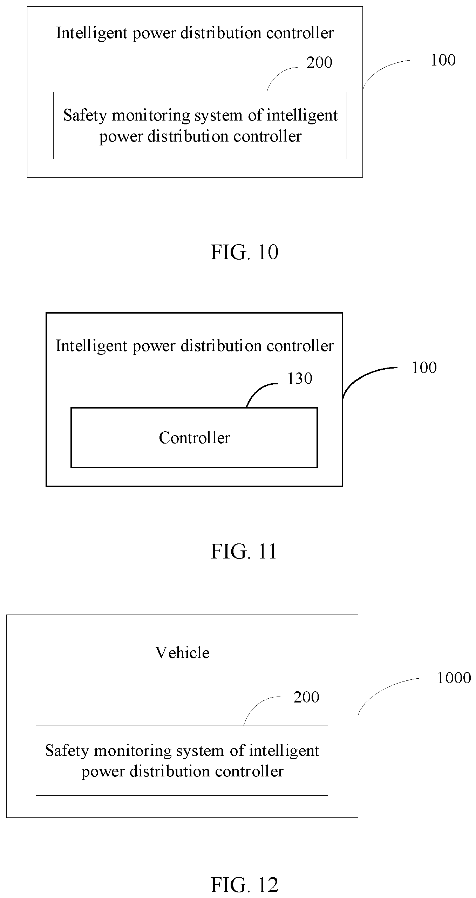

As shown in FIG. 10, the intelligent power distribution controller 100 in the present application includes the safety monitoring system 200 for the intelligent power distribution controller as described above. Alternatively, as shown in FIG. 11, the intelligent power distribution controller 100 in the present application includes the controller 130 as described above.

Corresponding to the above embodiments, the present application further proposes a vehicle.

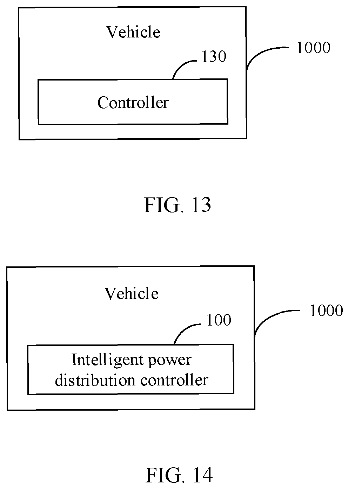

As shown in FIG. 12, a vehicle 1000 in the present application includes the safety monitoring system 200 for the intelligent power distribution controller as described above. Alternatively, as shown in FIG. 13, the vehicle 1000 in the present application includes the controller 130 as described above. Alternatively, as shown in FIG. 14, the vehicle 1000 in the present application includes the intelligent power distribution controller 100 as described above.

In conclusion, it should be noted that: the above embodiments are only used to illustrate the technical solutions of the present application and are not intended to limit them. Although the present application has been described in detail with reference to the foregoing embodiments, those of ordinary skill in the art should understand that: modifications can still be made to the technical solutions recorded in the foregoing embodiments, or equivalent replacements can be made to some or all of the technical features therein. These modifications or replacements do not make the essence of the corresponding technical solutions depart from the scope of the technical solutions of the embodiments of the present application, and they should all be covered within the scope of the claims and specification of the present application. In particular, as long as there is no structural conflict, the various technical features mentioned in the various embodiments can be combined in any manner. The present application is not limited to the specific embodiments disclosed herein, but includes all technical solutions falling within the scope of the claims.

## Claims

1. A safety monitoring system of an intelligent power distribution controller, wherein the intelligent power distribution controller comprises a main power supply channel for supplying power to a first-level load and a second-level load, a backup power supply channel for supplying power to the first-level load, and a controller for monitoring the main power supply channel and the backup power supply channel; the safety monitoring system is applied to the controller; and the safety monitoring system comprises:
a first software layer, configured to perform level-one diagnosis on each power supply channel and perform communication management;
a second software layer, configured to perform level-two diagnosis and control on each power supply channel and perform fault mode processing; and
a third software layer, configured to perform hardware monitoring on the controller.

2. The safety monitoring system according to claim 1, wherein the first software layer comprises:
a level-one diagnosis module, configured to perform level-one diagnosis on each power supply channel; and
a communication management module, configured to perform communication management.

3. The safety monitoring system according to claim 2, wherein
the level-one diagnosis module is configured to perform level-one diagnosis on each power supply channel to obtain a level-one fault signal; and
the communication management module is configured to process the level-one fault signal and send the processed level-one fault signal to an external communication bus of the intelligent power distribution controller; wherein the level-one diagnosis comprises one or more of level-one overcurrent diagnosis, level-one overvoltage diagnosis, level-one undervoltage diagnosis, and level-one overtemperature diagnosis.

4. The safety monitoring system according to claim 2 or 3, wherein functional safety levels of the level-one diagnosis module and the communication management module are QM under the ISO26262 standard.

5. The safety monitoring system according to any one of claims 1 to 4, wherein the second software layer comprises:
a main level-two monitoring module, configured to perform level-two diagnosis and control on the main power supply channel;
a backup level-two monitoring module, configured to perform level-two diagnosis and control on the backup power supply channel; and
a fault mode processing module, configured to perform fault mode processing.

6. The safety monitoring system according to claim 5, wherein
the main level-two monitoring module is configured to perform level-two diagnosis on the main power supply channel to obtain a level-two fault signal and perform fault protection control on the main power supply channel;
the backup level-two monitoring module is configured to perform level-two diagnosis on the backup power supply channel to obtain a level-two fault signal and perform fault protection control on the backup power supply channel; and
the fault mode processing module is configured to arbitrate the level-two fault signal to obtain a fault mode signal and send the fault mode signal to an external communication bus of the intelligent power distribution controller through the first software layer; wherein the level-two diagnosis comprises one or more of level-two overcurrent diagnosis, level-two overvoltage diagnosis, level-two undervoltage diagnosis, level-two overtemperature diagnosis, power supply switch stuck diagnosis, and current acquisition unit self-test diagnosis.

7. The safety monitoring system according to claim 6, wherein each power supply channel comprises a power supply switch and an electronic fuse, the electronic fuse is configured to output a level-two overcurrent signal and control the corresponding power supply switch to be turned off when a level-two overcurrent occurs in the corresponding power supply channel, and output a level-two overcurrent recovery signal when the level-two overcurrent in the corresponding power supply channel is recovered, and the main level-two monitoring module and the backup level-two monitoring module are respectively configured to:
receive the level-two overcurrent signal from the corresponding power supply channel;
when the level-two overcurrent signal from the corresponding power supply channel is received, output a level-two overcurrent fault signal and send a power cut-off signal to the electronic fuse of the corresponding power supply channel, to control the power supply switch of the corresponding power supply channel to be turned off; and
after a first preset time of delay, acquire the number of power supply recovery times of the corresponding power supply channel; and when the number of power supply recovery times is less than a preset recovery number and the level-two overcurrent recovery signal from the corresponding power supply channel is received, send a power connection signal to the electronic fuse of the corresponding power supply channel, to control the power supply switch of the corresponding power supply channel to be turned on for power supply recovery.

8. The safety monitoring system according to claim 6, wherein each power supply channel comprises a power supply switch and an electronic fuse; the electronic fuse is configured to output a level-two overvoltage signal and control the corresponding power supply switch to be turned off when a level-two overvoltage occurs in the corresponding power supply channel, and output a level-two overvoltage recovery signal when the level-two overvoltage in the corresponding power supply channel is recovered; and the main level-two monitoring module and the backup level-two monitoring module are respectively configured to:
receive the level-two overvoltage signal from the corresponding power supply channel;
when the level-two overvoltage signal from the corresponding power supply channel is received, output a level-two overvoltage fault signal and send a power cut-off signal to the electronic fuse of the corresponding power supply channel, to control the power supply switch of the corresponding power supply channel to be turned off;
receive the level-two overvoltage recovery signal from the corresponding power supply channel; and
when the level-two overvoltage recovery signal from the corresponding power supply channel is received, send a power connection signal to the electronic fuse of the corresponding power supply channel, to control the power supply switch of the corresponding power supply channel to be turned on for power supply recovery.

9. The safety monitoring system according to claim 6, wherein each power supply channel comprises a power supply switch and an electronic fuse, the electronic fuse is configured to acquire an actual on/off state of the corresponding power supply switch, and the main level-two monitoring module and the backup level-two monitoring module are respectively configured to:
receive the actual on/off state of the corresponding power supply switch;
when the actual on/off state is different from an expected on/off state, accumulate a stuck fault time of the corresponding power supply switch, and output a power supply switch stuck fault signal when the accumulated stuck fault time reaches a first preset value; and
when the actual on/off state is the same as the expected on/off state, decrement the stuck fault time of the corresponding power supply switch, and determine that stuck of the corresponding power supply switch is recovered when the decremented stuck fault time reaches a second preset value.

10. The safety monitoring system according to claim 6, wherein each power supply channel comprises an electronic fuse, the electronic fuse comprises a current acquisition unit configured to acquire a current of the corresponding power supply channel, and the main level-two monitoring module and the backup level-two monitoring module are respectively configured to:
send a current acquisition self-test instruction to the electronic fuse of the corresponding power supply channel, so that the electronic fuse of the corresponding power supply channel performs self-test on its own current acquisition unit and outputs a sampling resistor voltage difference of the current acquisition unit;
receive the sampling resistor voltage difference of the corresponding power supply channel;
when the sampling resistor voltage difference does not reach a preset voltage difference threshold, output a current acquisition unit self-tested fault signal; and
when the sampling resistor voltage difference reaches the preset voltage difference threshold, determine that a self-tested fault of the current acquisition unit is recovered.

11. The safety monitoring system according to any one of claims 5 to 10, wherein functional safety levels of the main level-two monitoring module and the backup level-two monitoring module are higher than or equal to ASIL B under the ISO26262 standard, and a functional safety level of the fault mode processing module is ASIL D under the ISO26262 standard.

12. The safety monitoring system according to any one of claims 5 to 11, wherein the third software layer comprises:
a system module, configured to perform hardware monitoring on the controller; and
a driver module, configured to perform drive control on each power supply channel.

13. The safety monitoring system according to claim 12, wherein the intelligent power distribution controller further comprises a safety power chip, and the system module is configured to:
receive a watchdog seed of the safety power chip, wherein the watchdog seed comprises a target control instruction of a target power supply channel, and the target power supply channel is at least one of the main power supply channel and the backup power supply channel;
send the watchdog seed to the second software layer, so that the main level-two monitoring module and backup level-two monitoring module of the second software layer generate a drive control instruction of the target power supply channel based on the target control instruction and send the drive control instruction to the driver module, so that the driver module generates a watchdog response signal; and
receive the watchdog response signal and send the watchdog response signal to the safety power chip, so that the safety power chip determines whether the controller is normal based on the watchdog response signal.

14. The safety monitoring system according to claim 12 or 13, wherein functional safety levels of the system module and the driver module are ASIL D under the ISO26262 standard.

15. The safety monitoring system according to any one of claims 1 to 14, wherein the first-level load is a safe-related load, and the second-level load is a non-safe-related load.

16. A controller, comprising the safety monitoring system of an intelligent power distribution controller according to any one of claims 1 to 15.

17. An intelligent power distribution controller, comprising the safety monitoring system of an intelligent power distribution controller according to any one of claims 1 to 15, or the controller according to claim 16.

18. A vehicle, comprising the safety monitoring system of an intelligent power distribution controller according to any one of claims 1 to 15, or the controller according to claim 16, or the intelligent power distribution controller according to claim 17.
